# EUROPÄISCHE PATENTSCHRIFT

(11) **EP 3 145 787 B1**
(45) Veröffentlichungstag und Bekanntmachung des Hinweises auf die Patenterteilung: **17.11.2021**
(21) Anmeldenummer: 15738902.4
(22) Anmeldetag: 16.07.2015
(51) Int. Cl.: G06F 13/40, H04B 3/54, B61L 15/00

(54) **SCHIENENFAHRZEUG**
RAIL VEHICLE
VÉHICULE FERROVIAIRE

(30) Priorität: 22.07.2014 DE 102014214228
(43) Veröffentlichungstag der Anmeldung: 29.03.2017
(73) Patentinhaber: Siemens Mobility GmbH, 81739 München (DE)
(72) Erfinder: FISCHER, Harald, 90762 Fürth (DE)
(86) Internationale Anmeldenummer: PCT/EP2015/066253
(87) Internationale Veröffentlichungsnummer: WO 2016/012335

(56) Entgegenhaltungen:
- EP-A1- 2 487 803
- DE-A1-102012 206 316
- US-A1- 2012 317 282
- None

## Beschreibung

Die Erfindung betrifft ein Schienenfahrzeug mit einer Fahrzeugeinheit, die Betriebsmittelsubsysteme aufweist, und einem Leitsystem umfassend eine erste Leitsystemebene, in welcher Betriebsmittelsubsysteme mittels einer digitalen Datenbusstruktur miteinander vernetzt sind, und zumindest eine zweite Leitsystemebene, die wenigstens einen der analogen Behandlung von Vorgängen in Betriebsmittelsubsystemen zugeordneten Leitungssatz aufweist. Die Erfindung betrifft weiterhin einen entsprechenden Verband von Fahrzeugeinheiten.

Es sind Schienenfahrzeuge, insbesondere Triebzüge bekannt, die mit einer digitalen Leittechnik ausgestattet sind. Hierzu sind Subsysteme des Schienenfahrzeugs mittels einer digitalen Datenbusstruktur miteinander vernetzt, welche eine erste Leitsystemebene bildet. Beispielsweise sind Steuergeräte wie ein Antriebssteuergerät und ein Bremssteuergerät an ein Bussystem angeschlossen, über welches sie miteinander und mit weiteren Betriebsmitteln - z.B. Elementen einer Sensorik - kommunizieren können. Unabhängig von dieser Leitsystemebene wird eine Vielzahl sicherheitsrelevanter Zusatzverbindungen benötigt, um Anforderungen gemäß CSM ("Common Safety Methods") zu erfüllen. Diese Zusatzverbindungen nehmen typischerweise die Form von elektrischen Schleifen an, die in der fachmännischen Sprache als "Sicherheitsschleifen" bekannt sind. Beispiele hierfür sind Türsteuerungsschleifen, Notbremsschleifen, Kuppelschleifen, Türverriegelungsschleifen, Bremsfehlschleifen usw. Zur Überwachung und Auswertung der von diesen Schleifen geführten elektrischen Signale ist eine aufwendige, konventionelle Schalttechnik notwendig. Diese basiert auf dem Einsatz einer Vielzahl von Schaltern gemäß der Relaistechnologie, mit welcher ein hoher Verdrahtungsaufwand einhergeht. Beispielsweise soll mittels konventioneller Schaltelemente mit ausreichender Sicherheit ermittelbar sein, ob eine Notbremse gezogen wurde oder eine Tür noch offen steht bzw. bereits verriegelt ist. Ebenfalls erfolgt eine Fahrtrichtungsabhängige Kontrolle eines Türöffnungsvorgangs durch die Steuerung konventioneller Schaltelemente.

Die hierzu notwendigen Verkabelungen, Kabeldurchführungen, Verbindungstechniken benötigen im Aufbau einen großen Einbauraum und sie sind mit langlebigen Verbindungselementen auszuführen (z.B. Gold- und Silberkontakte). Diese Lösungen sind im Sinne eines modularen Aufbaus mit Erweiterungsmöglichkeiten sehr eingeschränkt handhabbar.

Außerdem erfolgt die Anwendung bestehender Bussysteme einer digitalen Leittechnik nicht uneingeschränkt. Die in bestehenden Fahrzeugen vorhandene rechnergestützte Hardware kann nicht in jeder Hinsicht ein hohes Niveau der Sicherheitsintegrität (oder "SIL-Level") erreichen.

DE 10 2012 206 316 A1 beschreibt ein Steuerungssystem zur Steuerung eines Schienenfahrzeugs mit einer ersten Leitebene zur Steuerung erster Funktionen des Schienenfahrzeugs und einer zweiten Leitebene zur Steuerung von, aus den ersten Funktionen ausgewählten, zweiten Funktionenen des Schienenfahrzeugs, wobei die erste Leitebene eine erste Bedieneinheit und einen ersten Controller umfasst.

Der Erfindung liegt die Aufgabe zugrunde, ein Schienenfahrzeug bereitzustellen, bei welchem ein hohes Sicherheitsniveau mit einer aufwandsarmen Verdrahtung erreicht werden kann.

Die Erfindung ist durch die Merkmale der unabhängigen Ansprüche und 6 definiert.

Zur Lösung der Aufgabe wird vorgeschlagen, dass die Fahrzeugeinheit eine Leitsystemschnittstelleneinrichtung umfasst, die eine erste, der Datenbusstruktur zugeordnete Schnittstelleneinheit, zumindest eine zweite, dem Leitungssatz zugeordnete Schnittstelleneinheit und eine Steuereinheit aufweist, die in zumindest einem Betriebsmodus zur Behandlung der Vorgänge über die zweite Schnittstelleneinheit vorgesehen ist. Hierdurch können vorteilhaft konventionelle Schalt-, Überwachungs- und Auswertelemente für die Behandlung der Vorgänge eingespart werden. Die Verdrahtung der Fahrzeugeinheit kann dadurch erheblich vereinfacht werden.

Unter einem "Betriebsmittelsubsystem" ist erfindungsgemäß zumindest ein Betriebsmittel oder ein Satz von Betriebsmitteln zu verstehen, die einer gemeinsamen Aufgabe im Betrieb des Schienenfahrzeugs zugeordnet sind. Weist ein Betriebsmittelsubsystem mehrere Betriebsmittel auf, sind diese dazu vorgesehen, zumindest diese Aufgabe im Zusammenwirken durchzuführen. Das Betriebsmittelsubsystem umfasst neben den betreffenden Betriebsmitteln zweckmäßigerweise eine lokale Vernetzung der

Betriebsmittel miteinander. Typische Betriebsmittelsubsysteme sind als Antriebseinheit, Bremseinrichtung, Türeinrichtung, Klimatisierungseinrichtung, Fahrgastinformationseinrichtung, Notbremseinrichtung usw. ausgebildet.

Unter einer "Behandlung" eines Vorgangs soll insbesondere zumindest ein Steuern, beispielsweise ein Auslösen, ein Überwachen und/oder ein Auswerten des Vorgangs verstanden werden. Unter einer "analogen Behandlung" soll eine Behandlung verstanden werden, welche zumindest mit analogen Mitteln durchgeführt wird. Analoge Mittel sind insbesondere analoge Leitungen, die zweckmäßigerweise zur Führung eines analogen, elektrischen Signals ausgelegt sind, und Mittel, die an zumindest eine analoge Leitung angeschlossen, insbesondere physikalisch direkt angeschossen sind. Typische Mittel sind insbesondere Betätigungsmittel, wie z.B. Taster, Hebel usw. und Schaltmittel.

Der Leitungssatz ist dabei zweckmäßigerweise von analogen Leitungen gebildet. Diese unterscheiden sich von Leitungen der Datenbusstruktur, die zur Übertragung von Informationen in digitaler Form ausgelegt sind. Dementsprechend unterscheiden sich die erste Schnittstelleneinheit und die zweite Schnittstelleneinheit voneinander. Die erste Schnittstelleneinheit bildet Schnittstellen für die digitale Datenbusstruktur und weist digitale Anschlussmöglichkeiten zum Anschluss von Kabeln zur digitalen Übertragung auf, während die zweite Schnittstelleneinheit Schnittstellen für Leitungen des Leitungssatzes bildet und analoge Anschlussmöglichkeiten aufweist, die zum Anschließen analoger elektrischer Kabel ausgelegt sind. Die erste Schnittstelleinheit ist insbesondere als digitale Ein- und Ausgabeeinheit (oder digitale I/O-Einheit) ausgebildet, während die zweite Schnittstelleneinheit als analoge Ein- und Ausgabeeinheit (oder analoge I/O-Einheit) ausgeführt ist. Diese dient insbesondere dazu, ein elektrisches Signal mit zumindest einer bestimmten Eigenschaft - insbesondere einem bestimmten Spannungswert, einem bestimmten Stromwert, einer bestimmten Frequenz usw. - in eine Leitung des Leitungssatzes einzukoppeln und ein derartiges Signal von einer Leitung des Leitungssatzes zu erfassen oder auszulesen.

Bei einer analogen Behandlung von Vorgängen, die "über" die zweite Schnittstelleneinheit durch die Steuereinheit erfolgt, werden zweckmäßigerweise Signale eines digitalen Arbeitsvorgangs der Steuereinheit - insbesondere wenigstens einer Prozessoreinheit derselben - als Behandlung analoger elektrischer Signale des Leitungssatzes - umfassend insbesondere ein Einkoppeln und ein Auslesen - im Zusammenwirken mit der zweiten Schnittstelleneinheit umgesetzt.

Die Leitsystemschnittstelleneinrichtung ist durch die funktionale Trennung der Schnittstelleinheiten, die jeweils einer unterschiedlichen Leitsystemebene zugeordnet sind, vorteilhafterweise hierarchisch aufgebaut.

Für die digitale Datenbusstruktur können bekannte Technologien eingesetzt werden. Die Leitsystemschnittstelleneinrichtung kann insbesondere dank einer einfachen Kommunikationsstruktur an eine bestehende digitale Leittechnik angeschlossen werden, wodurch eine einfache Nachrüstung bestehender Schienenfahrzeuge erzielt werden kann. Eine bekannte Leittechnik basiert insbesondere auf der Ethernet-Technologie. Insbesondere kann als Bestandteil der Datenbusstruktur ein Bus des Typs "Profinet®" eingesetzt werden, wobei die Bustopologie beispielsweise einen Profinet-Ring aufweisen kann. Es sind dennoch weitere Strukturen, mit z.B. einem CAN-Bus, denkbar.

In einer besonders vorteilhaften Ausführung der Erfindung sind die Schnittstelleneinheiten und die Steuereinheit in einer zusammenhängenden Gehäuseeinheit der Leitsystemschnittstelleneinrichtung angeordnet.

Die Fahrzeugeinheit kann als einzelner Triebwagen für den Transport von Passagieren, als Lokomotive, als Triebkopfeinheit eines Triebzuges, als antriebsloser Reisezugwagen oder als Wagen eines aus einem Verband von Wagen bestehenden Triebzuges ausgebildet sein. Bei einem Triebzug kann eine Fahrzeugeinheit außerdem eine Zusammensetzung von Wagen sein, die eine steuerungstechnisch autarke Einheit bildet. In der fachmännischen Sprache wird eine solche Zusammensetzung auch "Consist" genannt. Beispielsweise kann eine Zusammensetzung einem halben Triebzug entsprechen.

Durch die Erfindung kann besonders vorteilhaft eine konventionelle Schalttechnik durch eine entsprechende softwaretechnische Implementierung der Steuereinheit ersetzt werden. Dadurch kann eine vorteilhafte Modularität, insbesondere hinsichtlich einer Funktionalitätserweiterung, erreicht werden.

In einer bevorzugten Ausbildung der Erfindung wird vorgeschlagen, dass die Steuereinheit und der Leitungssatz wenigstens eine zumindest teilweise logische Sicherheitsschleife bilden. Eine Sicherheitsschleife ist bekannterweise der Überwachung sicherheitsbezogener Vorgänge im Schienenfahrzeug zugeordnet. Herkömmlicherweise ist eine Sicherheitsschleife von einer elektrischen, analogen Leitung gebildet, in welcher eine Schalttechnik angeordnet ist, die abhängig von einem Betriebsereignis die Schleife schließen oder unterbrechen kann. Typische Beispiele hierfür sind eine Türsteuerungsschleife, eine Türverriegelungsschleife, eine Notbremsschleife, eine Bremsbefehlsschleife, eine Fahrtrichtungsermittlungsschleife und/oder eine Kuppelschleife. Durch die Erfindung können üblicherweise eingesetzte, einer Sicherheitsschleife zugeordnete, konventionelle Überwachungs- und Auswertemittel - wie insbesondere Komparatoren, UND-Glieder, ODER-Glieder, Timern usw. - durch softwaretechnische Maßnahmen der Steuereinheit ersetzt werden, die die Funktion dieser konventionellen Elemente erfüllen, insbesondere fingieren.

Außerdem wird vorgeschlagen, dass die Leitsystemschnittstelleneinrichtung zumindest eine dritte Schnittstelleneinheit aufweist, die zum Anschließen an zumindest zwei Zugbusse vorgesehen ist. Dadurch kann eine vorteilhafte Vereinfachung einer Verdrahtung zwischen zwei gekoppelten Fahrzeugeinheiten erreicht werden, da eine Kommunikation zwischen den Fahrzeugeinheiten - einschließlich einer Datenkommunikation bezüglich der über die zweite Schnittstelleneinheit behandelten Vorgänge - ausschließlich über die Zugbusse erfolgen kann. Bilden die Steuereinheit und der Leitungssatz wie oben vorgeschlagen wenigstens eine zumindest teilweise logische Sicherheitsschleife, kann eine Datenkommunikation über die Zugbusse die Übertragung von sicherheitsbezogenen Informationen betreffend die Sicherheitsschleife umfassen. Dadurch kann eine aufwendige, von den Zugbussen separate Verdrahtung zur Herstellung einer die gekoppelten Fahrzeugeinheiten umfassenden, physikalischen Sicherheitsschleife vermieden werden.

Unter einem "Zugbus" soll insbesondere ein Datenbus verstanden werden, welcher zu einer Datenkommunikation zwischen gekoppelten Fahrzeugeinheiten vorgesehen ist. Beispiele für einen Zugbus gemäß der TCN-Norm sind der WTB-Bus ("Wire Train Bus") und der ETB-Bus ("Ethernet Train Bus").

Es kann eine besonders einfache Architektur der Leitsystemschnittstelleneinrichtung erreicht werden, wenn die Leitsystemschnittstelleneinrichtung zumindest einen internen Datenbus aufweist, an welchen die Steuereinheit und die Schnittstelleneinheiten angeschlossen sind. Dadurch können Erweiterungsmöglichkeiten mit einem hohen Modularitätsgrad erreicht werden.

Die Erfindung geht ferner aus von einem Schienenfahrzeug mit einem Verband von Fahrzeugeinheiten, die jeweils Betriebsmittelsubsysteme aufweisen, und einem Leitsystem, das eine erste Leitsystemebene, in welcher Betriebsmittelsubsysteme mittels einer digitalen Datenbusstruktur miteinander vernetzt sind, und zumindest eine zweite Leitsystemebene aufweist, die wenigstens einen der analogen Behandlung von Vorgängen in Betriebsmittelsubsystemen zugeordneten Leitungssatz umfasst, wobei das Leitsystem eine dritte Leitsystemebene mit zumindest zwei Zugbussen aufweist, welche die Fahrzeugeinheiten miteinander verbinden.

Es wird vorgeschlagen, dass das Leitsystem einen Satz von Leitsystemschnittstelleneinrichtungen umfasst, die jeweils in einer unterschiedlichen Fahrzeugeinheit angeordnet sind und eine erste, der Datenbusstruktur zugeordnete Schnittstelleneinheit, eine zweite, dem Leitungssatz zugeordnete Schnittstelleneinheit, zumindest eine dritte Schnittstelleneinheit für die Zugbusse und eine Steuereinheit aufweisen, die in zumindest einem Betriebsmodus zur Behandlung der Vorgänge über die zweite Schnittstelleneinheit vorgesehen ist. Hierdurch können vorteilhaft konventionelle Schalt-, Überwachungs- und Auswertelemente für die Behandlung der Vorgänge eingespart werden. Die Verdrahtung der Fahrzeugeinheit kann dadurch erheblich vereinfacht werden. Die Verdrahtung der Fahrzeugeinheiten kann dadurch erheblich vereinfacht werden. Außerdem kann eine vorteilhafte Vereinfachung einer Verdrahtung zwischen den gekoppelten Fahrzeugeinheiten erreicht werden, da eine Kommunikation zwischen den Fahrzeugeinheiten - einschließlich einer Datenkommunikation bezüglich der über die zweite Schnittstelleneinheit behandelten Vorgänge - ausschließlich über die Zugbusse erfolgen kann. Eine Verdrahtung im Übergangsbereich zwischen zwei gekoppelten Fahrzeugeinheiten kann auf Leitungen für die Zugbusse und die elektrische Versorgung eingeschränkt werden. Eine zusätzliche Verdrahtung, insbesondere im Hinblick auf Sicherheitsanforderungen gemäß CSM ("Common Safety Methods") kann vorteilhafterweise entfallen. Dadurch kann eine erhebliche Kosteneinsparung in der Verdrahtung und im Einsatz von Steckern, Verbindern, Kabelführungen usw. erreicht werden. Des Weiteren kann eine vorteilhafte Gewichtsreduktion erreicht werden und es können Korrosionsschäden, Kabelbrüche und die damit verbundenen Servicekosten für den Betreiber reduziert werden.

Außerdem erlaubt die vorgeschlagene Architektur jede einzelne Fahrzeugeinheit aus Sicht der Leittechnik als eigenständige Einheit bzw. als ein eigenständiges Subsystem aufzubauen. Dadurch kann sich die Verfügbarkeit des Schienenfahrzeugs gegenüber bekannten Lösungen deutlich erhöhen, da ein leittechnischer Fehler in einer Fahrzeugeinheit situationsabhängig kein Hindernis für einen fortgesetzten Betrieb des Schienenfahrzeugs ist. Die Leitsystemschnittstelleneinrichtungen bilden vorteilhafterweise jeweils in jeder Fahrzeugeinheit Ankopplungspunkte der ersten und zweiten Leitsystemebenen an die dritte Leitsystemebene und deren Zugbusse, sodass ihnen zweckmäßigerweise die Funktion eines Gateways zugeordnet werden kann.

Das Schienenfahrzeug kann insbesondere als Triebzug ausgebildet sein, wobei die Fahrzeugeinheiten jeweils als für den Transport von Passagieren vorgesehener Wagen ausgebildet sind. Dabei ist zumindest ein Wagen mit einer Antriebseinheit ausgestattet. Das Schienenfahrzeug kann außerdem als eine Zusammensetzung von mehreren Triebzügen ausgebildet sein. Das Schienenfahrzeug kann des Weiteren als lokbespannter Zug ausgebildet sein, wobei zumindest eine Fahrzeugeinheit als Lokomotive ausgebildet ist und übrige Fahrzeugeinheiten als Reisezugwagen für den Transport von Passagieren ausgebildet sind. Ferner können die Fahrzeugeinheiten jeweils als Lokomotive ausgebildet sein, wobei das Schienenfahrzeug einem Verband von Lokomotiven in Mehrfachtraktion entspricht.

Durch die Erfindung kann besonders vorteilhaft eine konventionelle Schalttechnik durch eine entsprechende softwaretechnische Implementierung der Steuereinheit ersetzt werden. Dadurch kann eine vorteilhafte Modularität, insbesondere hinsichtlich einer Funktionalitätserweiterung, erreicht werden.

In einer bevorzugten Ausbildung der Erfindung wird vorgeschlagen, dass die Steuereinheit und der Leitungssatz wenigstens eine zumindest teilweise logische Sicherheitsschleife bilden. Eine Sicherheitsschleife ist bekannterweise der Überwachung sicherheitsbezogener Vorgänge im Schienenfahrzeug zugeordnet. Herkömmlicherweise ist eine Sicherheitsschleife von einer elektrischen, analogen Leitung gebildet, in welcher eine Schalttechnik angeordnet ist, die abhängig von einem Betriebsereignis die Schleife schließen oder unterbrechen kann. Typische Beispiele hierfür sind eine Türsteuerungsschleife, eine Türverriegelungsschleife, eine Notbremsschleife, eine Bremsbefehlsschleife, eine Fahrtrichtungsermittlungsschleife und/oder eine Kuppelschleife. Durch die Erfindung können üblicherweise eingesetzte, einer Sicherheitsschleife zugeordnete, konventionelle Überwachungs- und Auswertemittel - wie insbesondere Komparatoren, UND-Glieder, ODER-Glieder, Timern usw. - durch softwaretechnische Maßnahmen der Steuereinheit ersetzt werden, die die Funktion dieser konventionellen Elemente erfüllen, insbesondere fingieren. Durch die vorgeschlagene Systemarchitektur kann eine Datenkommunikation über die Zugbusse die Übertragung von sicherheitsbezogenen Informationen betreffend die zumindest eine Sicherheitsschleife umfassen. Dadurch kann eine aufwendige, von den Zugbussen separate Verdrahtung zur Herstellung einer die gekoppelten Fahrzeugeinheiten umfassenden, insbesondere verbandweiten physikalischen Sicherheitsschleife vermieden werden.

Es kann eine besonders einfache Architektur der Leitsystemschnittstelleneinrichtung erreicht werden, wenn die Leitsystemschnittstelleneinrichtungen jeweils zumindest einen internen Datenbus aufweisen, an welchen die Steuereinheit und die Schnittstelleneinheiten angeschlossen sind. Dadurch können Erweiterungsmöglichkeiten mit einem hohen Modularitätsgrad erreicht werden.

In einer bevorzugten Ausbildung der Erfindung wird vorgeschlagen, dass zumindest einer der Zugbusse als Ethernet-Zugbus ausgebildet ist. Dadurch können gängige, zuverlässige Netzwerkkomponenten eingesetzt werden. Außerdem kann eine bestehende, mit einem Ethernet-Zugbus ausgestattete Leittechnik einfach nachgerüstet werden.

Gemäß einer vorteilhaften Weiterbildung der Erfindung wird vorgeschlagen, dass das Schienenfahrzeug ein elektrisches Stromversorgungssystem aufweist, wobei einer der Zugbusse von Leitungen des Stromversorgungssystems gebildet ist. Dadurch kann konstruktiv einfach - insbesondere möglichst ohne zusätzliche Verdrahtung - ein Zugbus für eine verbandweite Datenübertragung bereitgestellt werden.

Eine vorteilhafte Redundanz kann ferner erreicht werden, wenn die dritte Leitsystemebene zumindest drei Zugbusse aufweist, welche jeweils die Fahrzeugeinheiten miteinander verbinden, wobei die dritte Schnittstelleneinheit zum Anschließen an die zumindest drei Zugbusse vorgesehen ist. In diesem Zusammenhang wird vorgeschlagen, dass in den Leitsystemschnittstelleneinrichtungen die Steuereinheiten in einem Betriebsmodus jeweils dazu vorgesehen sind, eine Verteilung eines Datenverkehrs auf die Zugbusse zu ermitteln und durchzuführen. Dadurch kann vorteilhaft eine selbsttätige Konfiguration des durch die Zugbusse gespannten Netzwerks erreicht werden. Dies bietet eine erhöhte Modularität bezüglich Konfigurationsänderungen an. Insbesondere können die Steuereinheiten jeweils Netzwerkknoten eines vermaschten Netzwerks bilden.

In einer weiteren Ausführungsform der Erfindung wird vorgeschlagen, dass die Zugbusse jeweils unterschiedlichen Sicherheitsstufen zugeordnet sind. Die Sicherheitsstufen sind insbesondere unterschiedlichen Sicherheitsnormen zugeordnet. Insbesondere kann eine erste Sicherheitsstufe Anforderungen der sogenannten "Security" einerseits zugeordnet sein, während eine zweite Sicherheitsstufe Anforderungen der sogenannten "Safety" zugeordnet ist. Unter "Safety-Anforderungen" sollen insbesondere Anforderungen verstanden werden, die in den Normen EN 50128, 50159, 50126, 50129 und/oder 61508 definiert sind. Insbesondere zielen die Safety-Anforderungen auf den Personenschutz ab, wobei die Security-Anforderungen der allgemeinen Datensicherheit zugeordnet sind. Die Safety-Anforderungen sind demnach strenger als die Security-Anforderungen.

In diesem Zusammenhang wird vorgeschlagen, dass einer der Zugbusse als Komfortbus ausgebildet ist, welcher zumindest zur Übertragung von Informationen für die Fahrgäste vorgesehen ist. Eine besonders vorteilhafte differenzierte Behandlung einer Kommunikation von Komfortfunktionen und sicherheitsbezogenen Funktionen kann des Weiteren erreicht werden, wenn einer der Zugbusse, der vom Komfortbus unterschiedlich ist, zur Übertragung von Antriebs- bzw. Bremsdaten dient.

Es wird ein Ausführungsbeispiel der Erfindung anhand der Zeichnungen erläutert. Es zeigen:
- Figur 1:: ein Schienenfahrzeug mit Betriebsmitteln in einer schematischen Seitenansicht,
- Figur 2:: das Schienenfahrzeug aus Figur 1 mit einem Leitsystem umfassend drei Zugbusse und Leitsystemschnittstelleneinrichtungen in jedem Wagen,
- Figur 3:: eine der Leitsystemschnittstelleneinrichtungen aus Figur 2 in einer Detailansicht,
- Figur 4:: eine Steuereinheit der Leitsystemschnittstelleneinrichtung aus Figur 3,
- Figur 5:: ein von den Zugbussen und den Leitsystemschnittstelleneinrichtungen gebildetes, vermaschtes Netzwerk und
- Figur 6:: den Kopfwagen des Schienenfahrzeugs aus Figur 1.

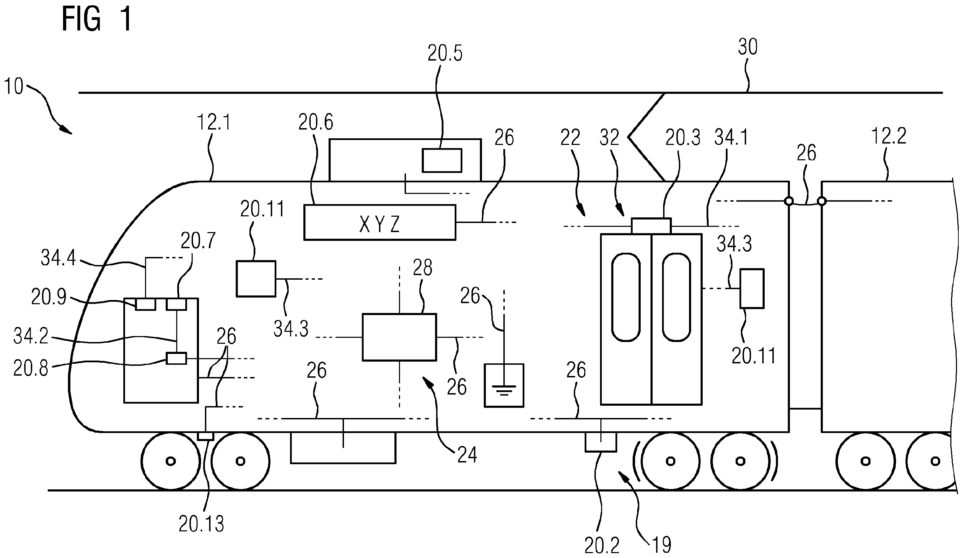

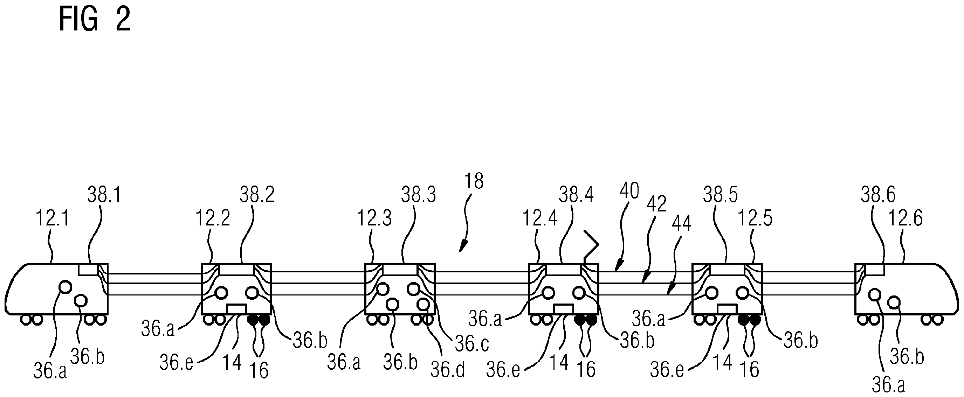

Figur 1 zeigt ein Schienenfahrzeug 10 in einer schematischen Seitenansicht. Das Schienenfahrzeug 10 ist als ein Verband von mehreren, jeweils als Wagen zum Transport von Passagieren ausgebildeten Fahrzeugeinheiten 12.1, 12.2 usw. ausgebildet, die miteinander mechanisch gekoppelt sind und einen Triebzug bilden. Hierzu ist zumindest eine der Fahrzeugeinheiten des Verbands mit einer Antriebseinheit 14 zum Antreiben wenigstens einer Triebachse 16 versehen (siehe Figur 2). In einer weiteren Ausführung ist denkbar, dass das Schienenfahrzeug 10 als einzelner Triebwagen ausgebildet ist. Außerdem kann das Schienenfahrzeug 10 einen Verband von antriebslosen Reisezugwagen aufweisen, welcher mit zumindest einem Triebfahrzeug, z.B. einer Lokomotive, gekoppelt ist.

Das Schienenfahrzeug 10 weist bekannterweise eine Anzahl von Betriebsmitteln auf, die einen Betrieb des Schienenfahrzeugs 10 ermöglichen. Diese können insbesondere als Steuereinheit, Sensoreinheit und/oder Aktorikeinheit ausgebildet sein. Die Betriebsmittel, die im Schienenfahrzeug 10 installiert und daher dauerhaft an der Fahrzeugstruktur gebunden sind, sind miteinander mittels eines in den Figuren 2 bis 6 näher dargestellten Leitsystems 18 kommunikations- und steuerungstechnisch miteinander vernetzt.

Die in Figur 1 beispielhaft gezeigten Betriebsmittel 20 sind als Betriebsmittel 20.2 einer Bremseinrichtung 19, Betriebsmittel 20.3 einer Türeinrichtung, Betriebsmittel 20.5 eines Klimatisierungsaggregats, Betriebsmittel 20.6 eines Fahrgastinformationssystems, Betriebsmittel 20.7, 20.8 und 20.9 einer Mensch-Maschine-Schnittstelle für den Triebfahrzeugführer, Betriebsmittel 20.11 einer Notbremseinrichtung und Betriebsmittel 20.13 einer Zugsicherung.

Das Schienenfahrzeug 10 weist bekannterweise ein elektrisches System 22 auf, das einen Satz elektrischer Leitungen umfasst, an welche die Betriebsmittel 20 angeschlossen sind. Das elektrische System 22 umfasst ein elektrisches Versorgungssystem 24, welches dazu dient, die Betriebsmittel 20 als elektrischer Verbraucher mit elektrischer Energie zu versorgen. Hierzu weist das Versorgungssystem 24 einen Satz elektrischer Leitungen 26 auf, welcher die Betriebsmittel 20 mit einer Energieversorgung 28 derart energietechnisch verbinden, dass ein Energiefluss zwischen der Energieversorgung 28 und den einzelnen Betriebsmitteln 20 herstellbar ist. Zum Satz elektrischer Leitungen 26 gehören neben elektrischen Leitern, welche zumindest eine Stromphase führen, insbesondere auch sogenannte Masseleitungen, die ein Referenzpotential - das Erdpotential oder das Fahrzeugpotential - führen. Die in Figur 1 schematisch gezeigte Energieversorgung 28 kann insbesondere einem Spannungszwischenkreis entsprechen, welcher selbst mittels einer nicht näher dargestellten Eingangsschaltung des Schienenfahrzeugs 10 mit Energie aus einer Netzversorgung 30 gespeist wird. Es wird durch zumindest einen Stromrichter des Versorgungssystems 24 aus der Energie des Spannungszwischenkreises ein für den Betrieb der zugeordneten elektrischen Verbraucher angepasstes elektrisches Signal erzeugt, welches mittels elektrischer Leitungen 26 zu diesen geführt wird. Abhängig von den zu versorgenden Verbrauchergruppen führen die Leitungen 26 elektrische Ströme, die unterschiedliche Eigenschaften (Gleichspannung, Wechselspannung, Spannungswert, Frequenzwert, Anzahl der Stromphasen usw.) aufweisen. Der Übersichtlichkeit halber werden die Leitungen 26 in Figur 1 schematisch dargestellt, wobei auf eine vollständige Darstellung der Vernetzung der Leitungen 26 verzichtet wird.

Das elektrische System 22 weist außerdem einen Satz 32 elektrischer Leitungen 34 auf. Dieser ist der analogen Behandlung von Vorgängen mittels analoger Spannungs- und/oder Stromsignalen zugeordnet. Beispiele solcher Analogvorgänge sind unten beschrieben.

Beispielsweise weist der Leitungssatz 32 eine erste Gruppe elektrischer Leitungen 34.1 auf, die die jeweils als Türantrieb zur Betätigung einer Türöffnung bzw. Türschließung ausgebildeten Betriebsmittel 20.3 in der dargestellten Fahrzeugeinheit 12.1 miteinander verbinden. In bekannten - hier nicht gezeigten - Lösungen erstrecken sich die Leitungen 34.1 herkömmlicherweise entlang des gesamten Verbands, wobei sie sämtliche Türantriebe des Verbands miteinander und mit einer Auswerteeinheit verbinden.

Außerdem umfasst der Leitungssatz 32 eine weitere Gruppe elektrischer Leitungen 34.2 auf, welcher der sogenannten "Totmannüberwachung" des Schienenfahrzeugs 10 zugeordnet ist. An diese sind bekannterweise die als Betätigungseinheit ausgebildeten Betriebsmittel 20.7 (Handbetägigung) und 20.8 (Fußbetätigung) angeschlossen. In bekannten - hier nicht gezeigten - Lösungen sind herkömmlicherweise ein mit Timern ausgestattetes, als Überwachungseinheit ausgebildetes Betriebsmittel und ein als Aufzeichnungsgerät (auch "Juristical Recorder" genannt) ausgebildetes Betriebsmittel an die elektrischen Leitungen 34.2 angeschlossen.

Des Weiteren sind elektrische Leitungen 34.3 des Leitungssatzes 32 dargestellt, welche der Notbremsfunktion des Schienenfahrzeugs 10 zugeordnet sind. Diese verbinden die als Notbremsbetätigung ausgebildeten Betriebsmittel 20.11 in der dargestellten Fahrzeugeinheit 12.1. Die elektrischen Leitungen 34.3 führen bekannterweise eine konstante Gleichspannung. In bekannten - hier nicht gezeigten - Lösungen erstrecken sich die Leitungen 34.3 der Notbremsfunktion herkömmlicherweise entlang des gesamten Verbands und verbinden sämtliche Notbremsbetätigungen des Verbands miteinander und mit einer Überwachungseinheit, die selbst mit einer Bremssteuerung der Bremseinrichtung 19 in Wirkverbindung steht.

Ferner umfasst der Leitungssatz 32 eine weitere Gruppe von Leitungen 34.4, die der Notbremsüberbrückungsfunktion zugeordnet sind. An diese ist das als Betätigungseinheit für den Fahrzeugführer ausgebildete Betriebsmittel 20.9 der Mensch-Maschine-Schnittstelle angeschlossen. In bekannten - hier nicht gezeigten - Lösungen steht dieses herkömmlicherweise in Verbindung mit einer Auswerteeinheit, welche selbst steuerungstechnisch mit einer Bremssteuerung der Bremseinrichtung 19 in Wirkverbindung steht.

Die oben beschriebenen Gruppen elektrischer Leitungen 34.1 bis 34.4 sind herkömmlicherweise Bestandteile von Schleifen, die in der fachmännischen Sprache auch "Sicherheitsschleifen" genannt sind. Im Beispiel der Leitungen 34.1 verbinden solche Leitungen in den Türantrieben integrierte Schalter, die jeweils eine in die Schleife eingespeiste konstante Spannung weiterführen, wenn die zugeordnete Tür geschlossen ist. Die weiteren, den Leitungen 34.2 bis 34.4 zugeordneten Funktionen basieren ebenfalls auf dem Prinzip eines Schalters, welcher eine Spannungsschleife schließt oder unterbricht, wobei die Einspeisung und das Auslesen des entsprechenden Spannungssignals in den bekannten Lösungen mittels Ein- und Ausgabemodulen erfolgen, die herkömmlicherweise für die oben beschriebenen Funktionen jeweils unterschiedlich sind. Die oben beschriebenen Gruppen von Leitungen des Leitungssatzes 32 gehören nämlich herkömmlicherweise zu voneinander unabhängigen sicherheitsbezogenen Systemen, die ihre eigene, ggf. verbandweite Verdrahtung erfordern.

Figur 2 zeigt den vollständigen Verband von Fahrzeugeinheiten 12.1 bis 12.6 in einer schematischen Seitenansicht. Betriebsmittel 20 des Schienenfahrzeugs 10, von denen einige Beispiele in Figur 1 gezeigt sind, sind im gesamten Verband verteilt angeordnet. Bestimmte Betriebsmittel 20, die insbesondere Bestandteile einer Antriebseinheit 14 oder einer Mensch-Maschine-Schnittstelle für den Fahrzeugführer sind, sind nicht in jeder Fahrzeugeinheit 12 vorhanden. Eine Antriebseinheit 14, durch welche Triebachsen 16 antreibbar sind, ist beispielweise jeweils in den Fahrzeugeinheiten 12.2, 12.3 und 12.5 angeordnet, wobei die übrigen Fahrzeugeinheiten 12.1, 12.3 und 12.6 antriebslos sind. Weitere Betriebsmittel 20, wie z.B. Komponenten des Fahrgastinformationssystems, sind in jeder Fahrzeugeinheit 12 des Verbands vorhanden. Der Übersichtlichkeit halber werden einzelne Betriebsmittel 20 in Figur 2 nicht gezeigt.

Betriebsmittel 20, die einer gemeinsamen Funktion im Schienenfahrzeug 10 zugeordnet sind, insbesondere zur Erledigung einer bestimmten Aufgabe im Zusammenwirken vorgesehen sind, werden steuerungstechnisch als Gruppe von Betriebsmitteln behandelt, die in der fachmännischen Sprache "Betriebsmittelsubsystem" genannt ist und der Aufgabe zugeordnet ist. Beispiele für Subsysteme, die einer Fahrzeugeinheit 12 angeordnet sind, sind "Antriebseinheit", "Bremseinheit", "Türeinrichtung", "Klimatisierungseinrichtung", "Fahrgastinformationseinrichtung", "Notbremseinrichtung" usw. In Figur 2 werden die Subsysteme schematisch dargestellt und jeweils mit dem Bezugszeichen 36.a, 36.b usw. bezeichnet. Die Antriebseinheiten 14 in den entsprechenden Fahrzeugeinheiten werden ebenfalls jeweils als Subsystem 36.e betrachtet.

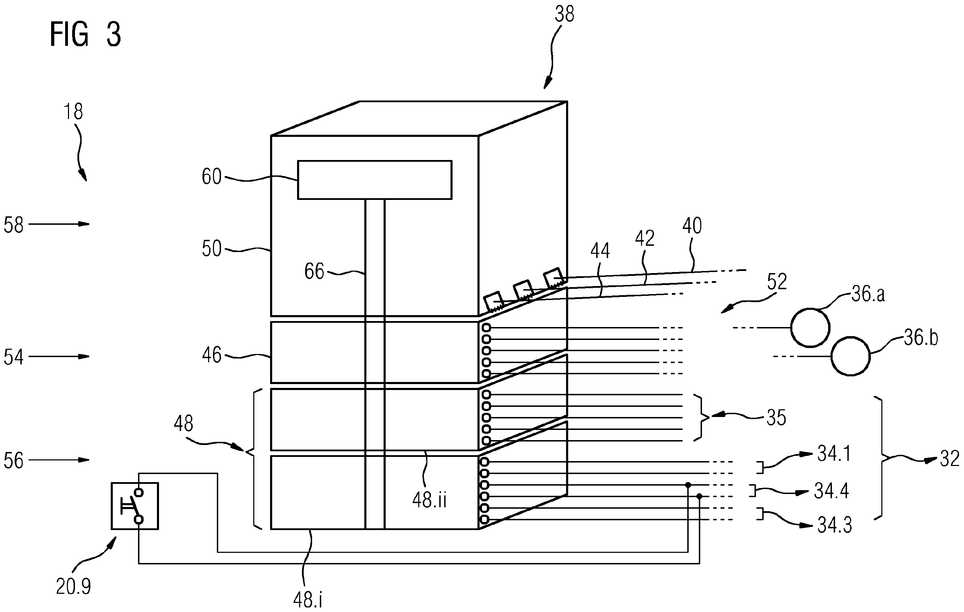

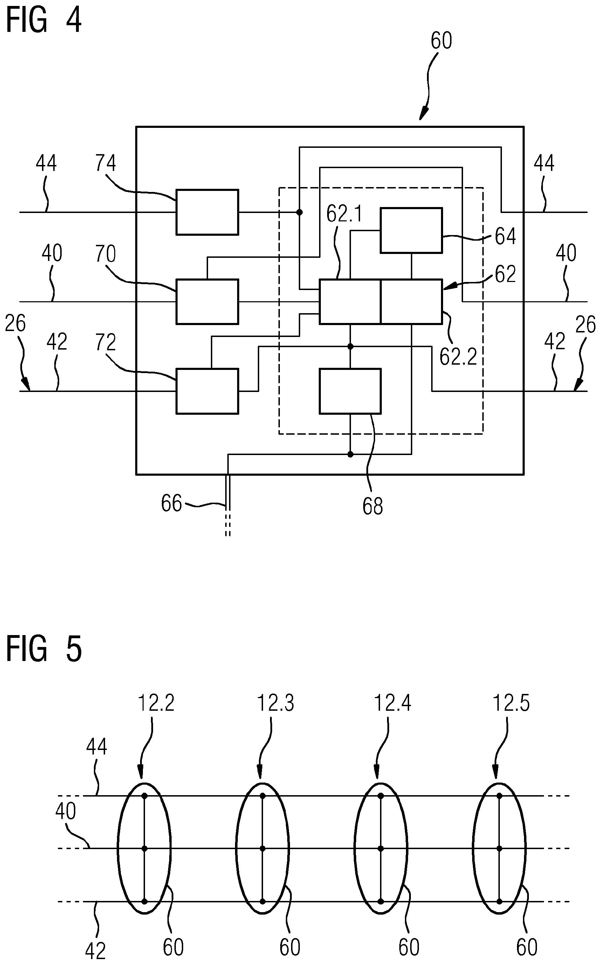

Figur 2 zeigt außerdem das Leitsystem 18 des Schienenfahrzeugs 10. Dieses weist einen Satz von Leitsystemschnittstelleneinrichtungen 38.1, 38.2 usw. auf, die jeweils in einer unterschiedlichen Fahrzeugeinheit 12.1, 12.2 usw. angeordnet sind. Die Leitsystemschnittstelleneinrichtungen 38 weisen jeweils Schnittstelleneinheiten auf, die in Figuren 3 und 4 näher dargestellt sind, an welche die Subsysteme 36 der entsprechenden Fahrzeugeinheit 12 angeschlossen sind. Die Leitsystemschnittstelleneinrichtungen 38 sind mittels Zugbussen 40, 42, 44 datentechnisch miteinander verbunden, die sich entlang des gesamten Verbands erstrecken und weiter unten näher beschrieben sind.

Figur 3 zeigt die Leitsystemschnittstelleneinrichtung 38.1 der Fahrzeugeinheit 12.1 in einer Detailansicht. Die folgenden Ausführungen finden für die weiteren Leitsystemschnittstelleneinrichtungen 38.2 bis 38.6 in den weiteren Fahrzeugeinheiten 12.2 bis 12.6 Anwendung.

Sie umfasst eine erste Schnittstelleneinheit 46, an welche Leitungen einer digitalen Datenbusstruktur 52 der entsprechenden Fahrzeugeinheit 12 angeschlossen sind. Hierzu können herkömmliche leittechnische Datenbusstrukturen eingesetzt werden, wie z.B. eine auf der Ethernet-Technologie basierte Busstruktur. Insbesondere kann als Bestandteil der Busstruktur ein Bus des Typs "Profinet®" eingesetzt werden, wobei die Bustopologie beispielsweise einen Profinet-Ring aufweisen kann. Es sind dennoch weitere Strukturen, wie z.B. eine CAN-Struktur, denkbar. Die Datenbusstruktur 52 und an diese angeschlossene Subsysteme 36 sind in Figur 3 schematisch dargestellt.

Die Leitsystemschnittstelleneinrichtung 38 weist außerdem eine zweite Schnittstelleneinheit 48 auf, an welche die Leitungen 34 des Leitungssatzes 32 angeschlossen sind. Insbesondere sind die Leitungen 34.1 der Türschleife, die Leitungen 34.2 der Totmannüberwachung (nicht gezeigt), die Leitungen 34.3 der Notbremsschleife und die Leitungen 34.4 der Notbremsüberbrückungsschleife an Anschlussmöglichkeiten der Schnittstelleneinheit 48 angeschlossen. Es ist zudem das als Betätigungseinheit, insbesondere in der Form eines Tasters ausgebildete Betriebsmittel 20.9 beispielhaft explizit dargestellt. Die Leitungen 34.4 der Notbremsüberbrückungsschleife, an welche das Betriebsmittel 20.9 angeschlossen ist, sind ebenfalls dargestellt.

Die Schnittstellen für die Leitungen 34 sind von einer ersten Einheit 48.i der Schnittstelleneinheit 48 gebildet. Eine weitere Einheit 46.ii der ersten Schnittstelleneinheit 48 bildet Anschlussmöglichkeiten für elektrische Leitungen 35 des Leitungssatzes 32, die der Durchführung anderweitiger Analogvorgänge zugeordnet sind, die sich von der Überwachung einer Sicherheitsschleife unterscheiden. Die elektrischen Leitungen 35 können lokalen Steuerleitungen der entsprechenden Fahrzeugeinheit 12 entsprechen.

Des Weiteren weist die Leitsystemschnittstelleneinrichtung 38 eine dritte Schnittstelleinheit 50 auf, an welche die Zugbusse 40, 42, 44 angeschlossen sind. Die Funktion und Ausbildung der Zugbusse werden weiter unten näher beschrieben.

Die Schnittstelleneinheiten 46, 48, 50 sind jeweils einer unterschiedlichen Leitsystemebene des Leitsystems 18 zugeordnet. In einer ersten Leitsystemebene 54 sind Subsysteme 36 mittels der digitalen Datenbusstruktur 52 miteinander vernetzt, wobei die der ersten Leitsystemebene 54 zugeordnete Schnittstelleneinheit der Leitsystemschnittstelleneinrichtung 38 der ersten Schnittstelleneinheit 46 entspricht. In einer zweiten Leitsystemebene 56 werden Betriebsmittel 20 in Subsystemen 36 zur analogen Behandlung von Vorgängen mittels des Leitungssatzes 32 verschaltet. Die entsprechende Schnittstelleneinheit der Leitsystemschnittstelleneinrichtung 38 ist von der zweiten Schnittstelleneinheit 48 gebildet. Die erste und zweite Leitsystemebenen 54, 56 können insbesondere durch die Art der Signale, die von ihnen behandelt werden, voneinander unterschieden werden. Die erste Leitsystemebene 54 ist der Behandlung digitaler Signale zugeordnet, während die zweite Leitsystemebene 56 der Behandlung analoger Signale zugeordnet ist. Die erste Schnittstelleneinheit 46 ist dabei als Input-Output-Einheit (oder Eingabe-Ausgabe-Einheit) für digitale Signale ausgebildet und weist Schnittstellen auf, die zum Anschließen von Kabeln zur digitalen Datenübertragung ausgebildet sind. Die zweite Schnittstelleneinheit 48 ist als Input-Output-Einheit für analoge Signale ausgebildet und weist Schnittstellen auf, die zum Anschließen analoger elektrischer Leitungen zur Führung analoger Signale ausgebildet sind.

Das Leitsystem 18 weist eine dritte Leitsystemebene 58 auf, welche von den die Fahrzeugeinheiten 12 verbindenden Zugbussen 40, 42, 44 gebildet ist. Zur dritten Leitsystemebene 58 gehört die Schnittstelleneinheit 50, welche Anschlussmöglichkeiten für die Zugbusse bildet.

Die Leitsystemschnittstelleneinrichtung 38 umfasst des Weiteren eine Steuereinheit 60, die zur Behandlung von Betriebsvorgängen auf der Basis von Signalen, die über die Schnittstelleneinheiten 46, 48, 50 empfangen bzw. gesendet werden, vorgesehen ist. Die Steuereinheit 60 ist in Figur 3 schematisch und in Figur 4 in einer Detailansicht dargestellt.

Die Steuereinheit 60 weist eine Recheneinheit 62 auf, die mit zwei Prozessoreinheiten 62.1, 62.2 ausgestattet ist. Durch die Ausbildung mit zwei Prozessoreinheiten können Steuervorgänge der Steuereinheit 60 redundant ausgebildet werden. Insbesondere kann eine diversitäre Redundanz erreicht werden, indem ein Steuervorgang mit unterschiedlichen Algorithmen programmiert wird, die von den verschiedenen Prozessoreinheiten 62.1, 62.2 ausgeführt werden. Die Prozessoreinheiten 62.1, 62.2 können von zwei physikalisch voneinander unterschiedlichen Prozessoren (oder CPU) gebildet sein oder sie können von einem Prozessor gebildet sein, wobei die Bildung der Prozessoreinheiten 62.1, 62.2 auf einer logischen Ebene erfolgt. Die Steuereinheit 60 umfasst ferner eine Speichereinheit 64, die als ROM- und/oder RAM-Speicher ausgebildet ist und in welcher Softwaremodule zur Ausführung von Steuervorgängen gespeichert sind.

Die Leitsystemschnittstelleneinrichtung 38 weist einen internen Datenbus 66 auf, an welchen die Steuereinheit 60 und die Schnittstelleneinheiten 46, 48, 50 angeschlossen sind (siehe auch Figur 3). Über den Datenbus 66 werden Daten zwischen den Schnittstellen der Schnittstelleneinheiten 46, 48, 50 und der Steuereinheit 60 geführt. Daten, die von den Schnittstelleneinheiten ausgelesen werden, werden über den Datenbus 66 auf die Steuereinheit 60 hin geführt und Daten, die von der Steuereinheit 60 erzeugt werden, werden über den Datenbus 66 auf die den Daten zugeordnete Schnittstelleneinheit gegeben.

Die Steuereinheit 60 umfasst ferner eine mit der Recheneinheit 62 datentechnisch verbundene Auswerteeinheit 68, die zur Auswertung von sicherheitsbezogenen Signalen vorgesehen ist, die von den Schnittstelleneinheiten 46, 48 ausgelesen werden. Es handelt sich demnach um Signale, die in der entsprechenden Fahrzeugeinheit 12 erzeugt werden, in welcher die jeweilige Leitsystemschnittstelleneinrichtung 38 angeordnet ist. Diese sicherheitsbezogenen Signale können in der ersten Leitsystemebene 54 erzeugt werden und in digitaler Form über die Datenbusstruktur 52 von der ersten Schnittstelleneinheit 46 empfangen werden. Des Weiteren können sicherheitsbezogene Signale in der zweiten Leitsystemebene 56 erzeugt werden und als analoge Signale von der zweiten Schnittstelleneinheit 48 erfasst werden. Ein Beispiel für ein derartiges analoges, sicherheitsbezogenes Signal ist eine Spannungsänderung in einer von den Leitungen 34.1, 34.2, 34.3 oder 34.4 gebildeten Sicherheitsschleife. Alternativ oder zusätzlich zu einer Spannungsänderung kann von der Schnittstelleneinheit 48 ein Signal mit einer bestimmten Frequenz erfasst werden. Allgemeiner betrachtet wird zumindest eine Änderung von wenigstens einer Signal- oder Leitungseigenschaft (Spannungswert, Stromwert, Frequenz, Widerstand, Leitfähigkeit usw.) durch die zweite Schnittstelleneinheit 48 erfasst und - durch eine Führung mittels des internen Busses 66 - von der Auswerteeinheit 68 ausgewertet.

Eine Änderung einer Signal- oder Leitungseigenschaft wird z.B. durch die Betätigung eines Betriebsmittels 20.11 durch einen Fahrgast (Notbremsschleife), durch eine Betätigung eines Betriebsmittels 20.3 bei einem Schließvorgang (Türschleife), in einer Kopfeinheit 12.1 oder 12.6 durch eine Betätigung des Betriebsmittels 20.7 (Totmannschleife) oder in einer Kopfeinheit 12.1 oder 12.6 durch eine Betätigung des Betriebsmittels 20.9 (Notbremsüberbrückungsschleife) ausgelöst. Diese Signale werden durch die Auswerteeinheit 68 erfasst und ausgewertet. Auswerteergebnisse werden auf die Recheneinheit 62 gegeben, die einen entsprechenden Steuervorgang ausführt. In den Beispielen der Notbremsschleife und der Totmannschleife kann der ausgelöste Steuervorgang das Einleiten einer Notbremsung sein. Im Beispiel der Notbremsüberbrückungsschleife kann bei der Erkennung der Betätigung des Betriebsmittels 20.9 durch die Auswerteeinheit 68 dieses Einleiten einer Notbremsung zumindest temporär durch die Recheneinheit 62 aufgehoben werden.

In Bezug auf diese analogen, sicherheitsbezogenen Signale, ist eine Aufgabe der Steuereinheit 60 - neben der Erfassung einer Änderung einer Signal- oder Leitungseigenschaft über die zweite Schnittstelleneinheit 48 - die Einspeisung des Leitungssatzes 32 mit geeigneten analogen Signalen, wie insbesondere die Einspeisung einer konstanten Gleichspannung oder einer mit einer bestimmten Frequenz behafteten Wechselspannung zu veranlassen. Anders formuliert wird der Betrieb der zweiten Schnittstelleneinheit 48 als analoge Input-Output-Einheit in zumindest einem Betriebsmodus der Steuereinheit 60 von dieser gesteuert, sodass Vorgänge, die über diese zweite Schnittstelleneinheit 48 erfolgen, insbesondere die Einspeisung und das Auslesen analoger Signale in den bzw. aus dem Leitungssatz 32, von dieser Steuereinheit 60 behandelt werden.

Insbesondere bilden die Steuereinheit 60 und der Leitungssatz 32 die oben beschriebenen Sicherheitsschleifen, wobei der Leitungssatz 32 und die zweite Schnittstelleneinheit 48, insbesondere die Einheit 48.i, die physikalische Struktur einer Schleife bilden, während die Steuereinheit 60 die herkömmlicherweise durch eine konventionelle Schalttechnik - insbesondere mittels Schaltern, Relais, Komparatoren, UND-Gliedern, ODER-Gliedern, Timern usw. - bereitgestellte Signalauswertung der Schleife auf einer logischen Ebene ersetzt.

Bezüglich der oben beschriebenen "Totmannschleife" kann die Steuereinheit 60 mit einem Betriebsmodus programmiert sein, in welchem sie die Funktion des juristischen Aufzeichnungsgeräts erfüllt.

Neben den oben erwähnten Tür- oder Türsteuerungsschleife, Brems- oder Bremsbefehlsschleife kann von der Steuereinheit 60 zusammen mit elektrischen Leitungen des Leitungssatzes 32 eine Türverriegelungsschleife, eine Fahrtrichtungsermittlungsschleife und/oder eine Kuppelschleife gebildet sein.

Die Steuereinheit 60 kann ferner in einem Überwachungsmodus über die zweite Schnittstelleneinheit 48 Leitungen 34, 35 des Leitungssatzes 32 überwachen. Durch die Erfassung einer Widerstandkenngröße oder einer Leitfähigkeitskenngröße kann insbesondere ein Leitungsbruch im Leitungssatz 32 durch die Steuereinheit 60 erkannt werden.

Wie oben bereits erwähnt weist die dritte Leitsystemebene 58 drei Zugbusse 40, 42, 44 auf, die sich entlang des gesamten Verbands von Fahrzeugeinheiten 12 erstrecken (siehe Figur 2). Jede Fahrzeugeinheit 12 ist an einem Ankopplungspunkt an die Zugbusse 40, 42, 44 angeschlossen. Dieser Ankopplungspunkt wird in den Fahrzeugeinheiten 12 jeweils durch die zugeordnete Leitsystemschnittstelleneinrichtung 38 gebildet. Hierzu ist diese wie oben beschrieben mit der Schnittstelleneinheit 50 versehen, an welche die Zugbusse 40, 42, 44 angeschlossen sind (siehe Figur 3). Der Anschluss dieser Zugbusse an die Steuereinheit 60 ist in Figur 4 gezeigt. Diese weist einen Satz von drei Kommunikationsprozessoren 70, 72, 74 auf, die jeweils einem unterschiedlichen Zugbus 40, 42 bzw. 44 zugeordnet ist. Diese Kommunikationsprozessoren 70, 72, 74 sind im Datenfluss des jeweils zugeordneten Zugbusses angeschlossen und sind mit der Recheneinheit 62 datentechnisch verbunden. Durch diese Verbindungen können Daten, die über die Zugbusse 40, 42, 44 und die entsprechende Schnittstelle der Schnittstelleneinheit 50 geführt werden, von der Recheneinheit 62 empfangen und ausgewertet werden. Außerdem können Daten, die in einem Steuervorgang der Steuereinheit 60 durch die Recheneinheit 62 erzeugt werden, über diese Verbindungen in die entsprechenden Zugbusse eingekoppelt werden.

Die Zugbusse 40, 44 sind jeweils als Ethernet-Bus ausgebildet. Der Zugbus 40 ist als Komfortbus ausgebildet, welcher zumindest zur Übertragung von Informationen für die Fahrgäste vorgesehen ist. Diese Informationen können Nutzinformationen, wie z.B. Informationen über einen Betriebsablauf, oder auch Unterhaltungsinformationen, wie insbesondre Audio- und Videodaten entsprechen. Der Zugbus 40 ist hierbei für eine Übertragungsrate von zumindest 100 MB/s ausgelegt.

Die Zugbusse 40, 44 unterscheiden sich bezüglich ihrer Grundfunktion durch die jeweilige Sicherheitsstufe, die ihnen zugeordnet ist. Eine Datenkommunikation, welche über den Zugbus 40 erfolgt, unterliegt allgemeinen Anforderungen der Datensicherheit, die in der BRD insbesondere vom Bundesamt für Sicherheit in der Informationstechnik (BSI) festgelegt werden. Die dem Zugbus 44 zugeordnete Sicherheitsstufe ist demgegenüber höher und entspricht Anforderungen des Personenschutzes. Solche Anforderungen sind in der fachmännischen Sprache auch "Safety-Anforderungen" genannt. Der Zugbus 44 ist beispielsweise gemäß einer TCN-Norm als ETB-Bus (oder "Ethernet Train Bus") ausgebildet. Über den Zugbus 44 werden insbesondere Daten für einen Antriebs- und/oder Bremsvorgang übermittelt.

Bezug nehmend auf das oben beschriebene Beispiel der Notbremsschleife werden, nachdem die Betätigung eines Betriebsmittels 20.11 der entsprechenden Fahrzeugeinheit 12 durch die Auswerteeinheit 68 erkannt wurde, von der Recheneinheit 62 Daten erzeugt, durch welche eine Notbremsung von der Bremseinrichtung 19 ausgelöst werden kann. Diese Daten werden über den Zugbus 44 an weitere Einheiten in anderen Fahrzeugeinheiten 12 des Schienenfahrzeugs 10 übermittelt. Der Zugbus 44 kann daher als Fahrbetriebsbus betrachtet werden, welcher zumindest zur Übertragung von Antriebs- bzw. Bremsdaten dient.

Der dritte Zugbus 42 ist von Leitungen 26 des elektrischen Versorgungsystems 24 gebildet (siehe auch Figur 1). Der Kommunikationsprozessor 72 ist mit einer Einkopplungs- und Entkopplungseinheit versehen, durch welche ein von der Recheneinheit 62 erzeugtes digitales Signal in analoger Form in eine Leitung 26 des elektrischen Versorgungssystems 24 eingekoppelt werden kann und ein über die Leitung 26 geführtes Analogsignal von dieser entkoppelt und in digitaler Form auf die Recheneinheit 62 gegeben werden kann. Hierzu ist die Einkopplungs- und Entkopplungseinheit zur Ausführung eines Modulations- bzw. Demodulationsverfahrens ausgebildet. Dieses Verfahren kann insbesondere ein orthogonales (De)Modulationsverfahren sein. Die Primärfunktion des dritten Zugbusses 42 ist die Bereitstellung zumindest eines redundanten Kommunikationskanals in der dritten Leitsystemebene 58.

Wie oben beschrieben weisen die Zugbusse 40, 42, 44 jeweils eine Grundfunktion auf, die insbesondere auf die jeweilig zugeordnete Sicherheitsstufe und insbesondere auf die Art der zu übertragenden Daten bezogen ist. Es ist jedoch denkbar, dass die Steuereinheiten 60 in den Fahrzeugeinheiten 12 jeweils in einem Betriebsmodus dazu vorgesehen sind, eine Verteilung eines Datenverkehrs auf die Zugbusse 40, 42, 44 zu ermitteln und durchzuführen. So können Daten, die von einer Steuereinheit 60 in einer Fahrzeugeinheit 12 über einen der Zugbusse empfangen wird, von dieser Steuereinheit 60 in einen anderen Zugbus weiter geleitet werden. Das Datennetzwerk, welches von den Zugbussen 40, 42, 44 und von der Steuereinheiten 60 der Leitsystemschnittstelleneinrichtung 38 gebildet ist, kann als vermaschtes Netzwerk betrieben werden, in welchem die Steuereinheiten 60 jeweils drei Netzwerkknoten bilden. Dies ist stark schematisch in Figur 5 dargestellt, wobei neben den Zugbussen 40, 42, 44 auch transversale Übergänge zwischen den Zugbussen durch die Steuereinheiten 60 gebildet sind.

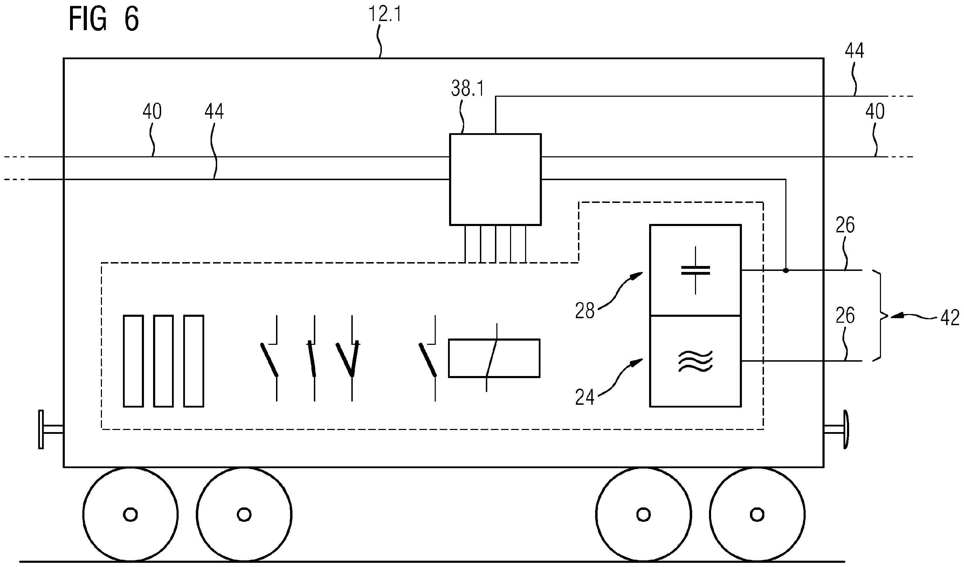

Figur 6 zeigt die als Kopfwagen ausgebildete Fahrzeugeinheit 12.1. In diesem ist die Energieversorgung 28 des elektrischen Versorgungssystems 24 angeordnet (siehe auch Figur 1). Die von dieser ausgehenden elektrischen Leitungen 26 werden als Übertragungsleitungen des Zugbusses 42 genutzt. Hierzu ist eine elektrische Leitung 26 datentechnisch an die dieser Fahrzeugeinheit 12.1 zugeordnete Leitsystemschnittstelleneinrichtung 38.1 datentechnisch angeschlossen. An diese sind die Zugbusse 40 und 44 ebenfalls angeschlossen. Es sind ferner Betriebsmittel 20 der Fahrzeugeinheit 12.1 gezeigt, durch welche analoge, sicherheitsbezogene Signale erzeugt werden, die von der Schnittstelleneinheit 48 empfangen und von der Auswerteeinheit 68 der Steuereinheit 60 ausgewertet werden. Diese Betriebsmittel 20 sind insbesondere als Betätigungselemente ausgebildet, die in einer oder mehreren der oben beschriebenen Sicherheitsschleifen geschaltet sind. Im Gegensatz zu bisherigen Lösungen werden Leitungen dieser Sicherheitsschleifen nicht direkt an entsprechenden Leitungen der benachbarten Fahrzeugeinheit 12.2 angeschlossen, sondern eine datentechnische Verbindung - einschließlich zu einer Datenkommunikation bezüglich der Sicherheitsschleifen - mit dieser Fahrzeugeinheit sowie mit allen weiteren Fahrzeugeinheiten 12 erfolgt ausschließlich über die lokale Leitsystemschnittstelleneinrichtung 38.1 und den Satz von Zugbussen 40, 42, 44. Ein datentechnischer Anschluss der benachbarten Fahrzeugeinheiten 12.1 und 12.2 aneinander kann demnach ausschließlich über die vorhandenen Zugbusse 40, 44 und über die elektrischen Leitungen 26 erfolgen, die den dritten Zugbus 42 bilden.

## Patentansprüche

1. Schienenfahrzeug mit einer Fahrzeugeinheit (12.1), die Betriebsmittelsubsysteme (36), welche ein Betriebsmittel oder einen einer gemeinsamen Aufgabe im Betrieb des Schienenfahrzeugs zugeordneten Satz von Betriebsmitteln umfassen, aufweist, und einem Leitsystem (18) umfassend eine erste Leitsystemebene (54), in welcher Betriebsmittelsubsysteme (36) mittels einer digitalen Datenbusstruktur (52) miteinander vernetzt sind, und zumindest eine zweite Leitsystemebene (56), die wenigstens einen der analogen Behandlung von Vorgängen in Betriebsmittelsubsystemen (36) zugeordneten Leitungssatz (32) aufweist,
**dadurch gekennzeichnet dass**,
die Fahrzeugeinheit (12.1) eine Leitsystemschnittstelleneinrichtung (38) umfasst, die eine erste, der Datenbusstruktur (52) zugeordnete Schnittstelleneinheit (46), zumindest eine zweite, dem Leitungssatz (32) zugeordnete Schnittstelleneinheit (48) und eine Steuereinheit (60) aufweist, die in zumindest einem Betriebsmodus zur Behandlung der Vorgänge über die zweite Schnittstelleneinheit (48) vorgesehen ist.

2. Schienenfahrzeug nach Anspruch 1,
**dadurch gekennzeichnet, dass**
die Steuereinheit (60) und der Leitungssatz (32) wenigstens eine zumindest teilweise logische Sicherheitsschleife bilden.

3. Schienenfahrzeug nach Anspruch 2,
**dadurch gekennzeichnet, dass**
die Steuereinheit (60) und der Leitungssatz (32) eine Türsteuerungsschleife, eine Türverriegelungsschleife, eine Notbremsschleife, eine Bremsbefehlsschleife, eine Fahrtrichtungsermittlungsschleife und/oder eine Kuppelschleife bilden.

4. Schienenfahrzeug nach einem der vorhergehenden Ansprüche,
**dadurch gekennzeichnet, dass**
die Leitsystemschnittstelleneinrichtung (38) zumindest eine dritte Schnittstelleneinheit (50) aufweist, die zum Anschließen an zumindest zwei Zugbusse (40, 42, 44) vorgesehen ist.

5. Schienenfahrzeug nach Anspruch 4,
**dadurch gekennzeichnet, dass**
die Leitsystemschnittstelleneinrichtung (38) zumindest einen internen Datenbus (66) aufweist, an welchen die Steuereinheit (60) und die Schnittstelleneinheiten (46, 48, 50) angeschlossen sind.

6. Schienenfahrzeug mit einem Verband von Fahrzeugeinheiten (12.1 - 12.6), die jeweils Betriebsmittelsubsysteme (36), welche ein Betriebsmittel oder einen einer gemeinsamen Aufgabe im Betrieb des Schienenfahrzeugs zugeordneten Satz von Betriebsmitteln umfassen, aufweisen, und einem Leitsystem (18), das eine erste Leitsystemebene (54), in welcher Betriebsmittelsubsysteme (36) mittels einer digitalen Datenbusstruktur (52) miteinander vernetzt sind, und zumindest eine zweite Leitsystemebene (56) aufweist, die wenigstens einen der analogen Behandlung von Vorgängen in Betriebsmittelsubsystemen (36) zugeordneten Leitungssatz (32) umfasst, wobei das Leitsystem (18) eine dritte Leitsystemebene (58) mit zumindest zwei Zugbussen (40, 42, 44) aufweist, welche die Fahrzeugeinheiten (12.1 - 12.6) miteinander verbinden,
**dadurch gekennzeichnet, dass**
das Leitsystem (18) einen Satz von Leitsystemschnittstelleneinrichtungen (38.1 - 38.6) umfasst, die jeweils in einer unterschiedlichen Fahrzeugeinheit (12.1 - 12.6) angeordnet sind und eine erste, der Datenbusstruktur (52) zugeordnete Schnittstelleneinheit (46), eine zweite, dem Leitungssatz (32) zugeordnete Schnittstelleneinheit (48), zumindest eine dritte Schnittstelleneinheit (50) für die Zugbusse (40, 42, 44) und eine Steuereinheit (60) aufweisen, die in zumindest einem Betriebsmodus zur Behandlung der Vorgänge über die zweite Schnittstelleneinheit (48) vorgesehen ist.

7. Schienenfahrzeug nach Anspruch 6,
**dadurch gekennzeichnet, dass**
die Steuereinheit (60) und der Leitungssatz (32) wenigstens eine zumindest teilweise logische Sicherheitsschleife bilden.

8. Schienenfahrzeug nach Anspruch 7,
**dadurch gekennzeichnet, dass**
die Steuereinheit (60) und der Leitungssatz (32) eine Türsteuerungsschleife, eine Türverriegelungsschleife, eine Notbremsschleife, eine Bremsbefehlsschleife, eine Fahrtrichtungsermittlungsschleife und/oder eine Kuppelschleife bilden.

9. Schienenfahrzeug nach einem der Ansprüche 6 bis 8,
**dadurch gekennzeichnet, dass**
die Leitsystemschnittstelleneinrichtungen (38.1 - 38.6) jeweils zumindest einen internen Datenbus (66) aufweisen, an welchen die Steuereinheit (60) und die Schnittstelleneinheiten (46, 48, 50) angeschlossen sind.

10. Schienenfahrzeug nach Anspruch 4 oder einem der Ansprüche 6 bis 9,
**dadurch gekennzeichnet, dass**
zumindest einer (40, 42) der Zugbusse als Ethernet-Zugbus ausgebildet ist.

11. Schienenfahrzeug nach Anspruch 4 oder einem der Ansprüche 6 bis 10,
**gekennzeichnet durch**
ein elektrisches Stromversorgungssystem (24), wobei einer (44) der Zugbusse von Leitungen (26) des Stromversorgungssystems (24) gebildet ist.

12. Schienenfahrzeug nach Anspruch 4 oder einem der Ansprüche 6 bis 11,
**dadurch gekennzeichnet, dass**
die dritte Leitsystemebene (58) zumindest drei Zugbusse (40, 42, 44) aufweist, welche jeweils die Fahrzeugeinheiten (12.1 - 12.6) miteinander verbinden, wobei die dritte Schnittstelleneinheit (50) zum Anschließen an die zumindest drei Zugbusse (40, 42, 44) vorgesehen ist.

13. Schienenfahrzeug nach Anspruch 12,
**dadurch gekennzeichnet, dass**
in den Leitsystemschnittstelleneinrichtungen (38.1 - 38.6) die Steuereinheiten (60) in einem Betriebsmodus jeweils dazu vorgesehen sind, eine Verteilung eines Datenverkehrs auf die Zugbusse (40, 42, 44) zu ermitteln und durchzuführen.

14. Schienenfahrzeug nach Anspruch 4 oder einem der Ansprüche 6 bis 13,
**dadurch gekennzeichnet, dass**
die Zugbusse (40, 42) jeweils unterschiedlichen Sicherheitsstufen zugeordnet sind.

15. Schienenfahrzeug nach Anspruch 14,
**dadurch gekennzeichnet, dass**
einer (40) der Zugbusse als Komfortbus ausgebildet ist, welcher zumindest zur Übertragung von Informationen für die Fahrgäste vorgesehen ist.

## Claims

1. Rail vehicle having a vehicle unit (12.1) which has operating means subsystems (36) that comprise an operating means or a set of operating means which are assigned to a common task in the operation of the rail vehicle, and having a guide system (18) comprising a first guide system level (54), in which operating means subsystems (36) are networked with one another by means of a digital data bus structure (52), and at least one second guide system level (56) which has at least one line set (32) assigned to the analogue handling of processes in operating means subsystems (36),
**characterised in that**
the vehicle unit (12.1) comprises a guide system interface device (38) which has a first interface unit (46) assigned to the data bus structure (52), at least one second interface unit (48) assigned to the line set (32), and a control unit (60) which in at least one operating mode is provided for handling the processes by way of the second interface unit (48) .

2. Rail vehicle according to claim 1,
**characterised in that**
the control unit (60) and the line set (32) form at least one at least partially logical safety loop.

3. Rail vehicle according to claim 2,
**characterised in that**
the control unit (60) and the line set (32) form a door control loop, a door locking loop, an emergency brake loop, a brake command loop, a direction-of-travel determination loop, and/or a coupling loop.

4. Rail vehicle according to one of the preceding claims,
**characterised in that**
the guide system interface device (38) has at least one third interface unit (50) which is provided for connecting to at least two train buses (40, 42, 44).

5. Rail vehicle according to claim 4,
**characterised in that**
the guide system interface device (38) has at least one internal data bus (66) to which the control unit (60) and the interface units (46, 48, 50) are connected.

6. Rail vehicle comprising a consist of vehicle units (12.1 - 12.6), each of which has operating means subsystems (36) that comprise an operating means or a set of operating means which are assigned to a common task in the operation of the rail vehicle, and a guide system (18) which has a first guide system level (54), in which operating means subsystems (36) are networked with one another by means of a digital data bus structure (52), and at least one second guide system level (56) which comprises at least one line set (32) assigned to the analogue handling of processes in operating means subsystems (36), wherein the guide system (18) has a third guide system level (58) comprising at least two train buses (40, 42, 44) which connect the vehicle units (12.1 - 12.6) to one another,
**characterised in that**
the guide system (18) comprises a set of guide system interface devices (38.1 - 38.6), each of which is arranged in a different vehicle unit (12.1 - 12.6), and a first interface unit (46) assigned to the data bus structure (52), a second interface unit (48) assigned to the line set (32), at least one third interface unit (50) for the train buses (40, 42, 44), and a control unit (60) which in at least one operating mode is provided for handling the processes by way of the second interface unit (48).

7. Rail vehicle according to claim 6,
**characterised in that**
the control unit (60) and the line set (32) form at least one at least partially logical safety loop.

8. Rail vehicle according to claim 7,
**characterised in that**
the control unit (60) and the line set (32) form a door control loop, a door locking loop, an emergency brake loop, a brake command loop, a direction-of-travel determination loop, and/or a coupling loop.

9. Rail vehicle according to one of claims 6 to 8,
**characterised in that**
each of the guide system interface devices (38.1 - 38.6) has at least one internal data bus (66) to which the control unit (60) and the interface units (46, 48, 50) are connected.

10. Rail vehicle according to claim 4 or one of claims 6 to 9,
**characterised in that**
at least one (40, 42) of the train buses is embodied as an Ethernet train bus.

11. Rail vehicle according to claim 4 or one of claims 6 to 10,
**characterised by**
an electrical power supply system (24), wherein one (44) of the train buses is formed by lines (26) of the power supply system (24).

12. Rail vehicle according to claim 4 or one of claims 6 to 11,
**characterised in that**
the third guide system level (58) has at least three train buses (40, 42, 44), each of which connects the vehicle units vehicle units (12.1 - 12.6) to one another, wherein the third interface unit (50) is provided for connecting to the at least three train buses (40, 42, 44).

13. Rail vehicle according to claim 12,
**characterised in that**
in one operating mode the control units (60) in the guide system interface devices (38.1 - 38.6) are in each case provided in order to determine and perform a distribution of data traffic to the train buses (40, 42, 44).

14. Rail vehicle according to claim 4 or one of claims 6 to 13,
**characterised in that**
the train buses (40, 42) are in each case assigned to different safety levels.

15. Rail vehicle according to claim 14,
**characterised in that**
one (40) of the train buses is embodied as a convenience bus which is provided at least for the purpose of transmitting information for the passengers.

## Revendications

1. Véhicule ferroviaire comprenant une unité-véhicule (12.1), qui a des sous-systèmes (36) de moyen de fonctionnement, lesquels comprennent un moyen de fonctionnement ou un ensemble de moyens de fonctionnement associé à une tâche commune dans le fonctionnement du véhicule ferroviaire, et un système (18) de conduite comprenant un premier plan (54) de système de conduite, dans lequel des sous-systèmes (36) de moyen de fonctionnement sont mis en réseau entre eux au moyen d'une structure (52) de bus de données numériques, et au moins un deuxième plan (56) de système de conduite, qui a au moins un ensemble (32) de lignes associé au traitement analogique de processus dans des sous-systèmes (36) de moyen de fonctionnement,
**caractérisé en ce que**
l'unité-véhicule (12.1) comprend un dispositif (38) d'interface de système de conduite, qui a une première unité (46) d'interface, associée à la structure (52) de bus de données, au moins une deuxième unité (48) d'interface, associée à l'ensemble (32) de lignes, et une unité (60) de commande, qui est prévue dans au moins un mode de fonctionnement pour le traitement des processus par l'intermédiaire de la deuxième unité (48) d'interface.

2. Véhicule ferroviaire suivant la revendication 1,
**caractérisé en ce que**
l'unité (60) de commande et l'ensemble (32) de lignes forment au moins une boucle de sécurité au moins en partie logique.

3. Véhicule ferroviaire suivant la revendication 2,
**caractérisé en ce que**
l'unité (60) de commande et l'ensemble (32) de lignes forment une boucle de commande de porte, une boucle de verrouillage de porte, une boucle de frein d'urgence, une boucle d'instruction de freinage, une boucle de détermination du sens de la marche et/ou une boucle d'accouplement.

4. Véhicule ferroviaire suivant l'une des revendications précédentes,
**caractérisé en ce que**
le dispositif (38) d'interface de système de conduite a au moins une troisième unité (50) d'interface, qui est prévue pour le raccordement à au moins deux bus (40, 42, 44) de train.

5. Véhicule ferroviaire suivant la revendication 4,
**caractérisé en ce que**
le dispositif (38) d'interface de système de conduite a au moins un bus (66) de données interne, auquel l'unité (60) de commande et les unités (46, 48, 50) d'interface sont raccordées.

6. Véhicule ferroviaire comprenant une rame d'unités-véhicules (12.1 - 12.6), qui ont chacune des sous-systèmes (36) de moyen de fonctionnement, lesquels comprennent un moyen de fonctionnement ou un ensemble de moyens de fonctionnement associé à une tâche commune dans le fonctionnement du véhicule ferroviaire, et un système (18) de conduite comprenant un premier plan (54) de système de conduite, dans lequel des sous-systèmes (36) de moyen de fonctionnement sont mis en réseau entre eux au moyen d'une structure (52) de bus de données numériques, et au moins un deuxième plan (56) de système de conduite, qui a au moins un ensemble (32) de lignes associé au traitement analogique de processus dans des sous-systèmes (36) de moyen de fonctionnement, dans lequel le système (38) de conduite a un troisième plan (58) de système de conduite ayant au moins deux bus (40, 42, 44) de train, qui relient entre elles les unités-véhicules (12.1 - 12.6),
**caractérisé en ce que**
le système (18) de conduite comprend un ensemble de dispositifs (38.1 - 38.6) d'interfaces de système de conduite, qui sont disposés chacun dans une unité-véhicule (12.1 - 12.6) différente et qui ont une première unité (46) d'interface, associée à la structure (52) de bus de données, une deuxième unité (48) d'interface, associée à l'ensemble (32) de lignes, au moins une troisième unité (50) d'interface pour les bus (40, 42, 44) de train et une unité (60) de commande, qui est prévue dans au moins un mode de fonctionnement pour le traitement des processus par l'intermédiaire de la deuxième unité (48) d'interface.

7. Véhicule ferroviaire suivant la revendication 6,
**caractérisé en ce que**
l'unité (60) de commande et l'ensemble (32) de lignes forment au moins une boucle de sécurité au moins en partie logique.

8. Véhicule ferroviaire suivant la revendication 7,
**caractérisé en ce que**
l'unité (60) de commande et l'ensemble (32) de lignes forment une boucle de commande de porte, une boucle de verrouillage de porte, une boucle de frein d'urgence, une boucle d'instruction de freinage, une boucle de détermination du sens de la marche et/ou une boucle d'accouplement.

9. Véhicule ferroviaire suivant l'une des revendications 6 à 8,
**caractérisé en ce que**
les dispositifs (38.1 - 38.6) d'interfaces de système de conduite ont chacun au moins un bus (66) de données interne, auquel l'unité (60) et les unités (46, 48, 50) d'interfaces sont raccordées.

10. Véhicule ferroviaire suivant la revendication 4 ou l'une des revendications 6 à 9,
**caractérisé en ce que**
au moins l'un (40, 42) des bus de train est constitué en bus de train d'éthernet.

11. Véhicule ferroviaire suivant la revendication 4 ou l'une des revendications 6 à 10,
**caractérisé par**
un système (24) d'alimentation en courant électrique, dans lequel l'un (44) des bus de train est formé par des lignes (26) du système (24) d'alimentation en courant.

12. Véhicule ferroviaire suivant la revendication 4 ou l'une des revendications 6 à 11,
**caractérisé en ce que**
le troisième plan (58) de système de conduite a au moins trois bus (40, 42, 44) de train, qui relient respectivement les unités-véhicules (12.1 - 12.6) entre elles, la troisième unité (50) d'interface étant prévue pour le raccordement au au moins trois bus (40, 42, 44) de train.

13. Véhicule ferroviaire suivant la revendication 12,
**caractérisé en ce que**
dans les dispositifs (38.1 - 38.6) d'interface de système de conduite, les unités (60) de commande sont prévues dans un mode de fonctionnement respectivement pour déterminer et effectuer une répartition d'un trafic de données sur les bus (40, 42, 44) de train.

14. Véhicule ferroviaire suivant la revendication 4 ou l'une des revendications 6 à 13,
**caractérisé en ce que**
les bus (40, 42) de train sont associés chacun à des étages de sécurité différents.

15. Véhicule ferroviaire suivant la revendication 14,
**caractérisé en ce que**
l'un (40) des bus de train est constitué sous la forme d'un bus de grand confort, qui est prévu au moins pour la transmission d'informations au passager.
